(19) Europäisches Patentamt
European Patent Office
Office européen des brevets

(11) **EP 3 581 340 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **18177540.4**

(22) Anmeldetag: **13.06.2018**

(51) Internationale Patentklassifikation (IPC):
**B25J 9/16** *(2006.01)*

(52) Gemeinsame Patentklassifikation (CPC):
**B25J 9/1643; G05B 2219/39081; G05B 2219/40338**

(54) **VERFAHREN ZUM STEUERN EINES ROBOTERS, ENTSPRECHENDER DATENSPEICHER UND ROBOTER**

METHOD FOR ACTUATING A ROBOT, CORRESPONDING DATA STORAGE AND ROBOT

PROCÉDÉ DE COMMANDE D'UN ROBOT, MÉMOIRE DE DONNÉES CORRESPONDANT ET ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.12.2019 Patentblatt 2019/51**

(73) Patentinhaber: **Siemens Healthcare GmbH 91052 Erlangen (DE)**

(72) Erfinder:
• **Mebarki, Rafik**
**90762 Fürth (DE)**
• **Mönnich, Holger**
**86316 Friedberg (DE)**

(56) Entgegenhaltungen:
• **Francisco Geu Flores: "Singularity Avoidance by Virtual Redundant Axis and its Application to Large Base Motion Compensation of Serial Robots", , 1. September 2012 (2012-09-01), Seiten 1-8, XP055521372, Gefunden im Internet: URL:https://www.researchgate.net/publicati on/263408978_Singularity_Avoidance_by_Virt ual_Redundant_Axis_and_its_Application_to_ Large_Base_Motion_Compensation_of_Serial_ R obots [gefunden am 2018-11-06]**

• **LUIS GRACIA ET AL: "Automated Milling Path Tracking and CAM-ROB Integration for Industrial Redundant Manipulators", INTERNATIONAL JOURNAL OF ADVANCED ROBOTIC SYSTEMS, Bd. 9, Nr. 3, 1. Januar 2012 (2012-01-01), Seite 62, XP055521448, CR ISSN: 1729-8814, DOI: 10.5772/51101**

• **PASHKEVICH A P ET AL: "Computer-aided programming of robotic manufacturing cells for laser cutting applications", EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15. Oktober 2001 (2001-10-15), Seiten 603-612, XP010589021, ISBN: 978-0-7803-7241-2**

• **ZHIJUN LI ET AL: "Motion control of nonholonomic mobile underactuated manipulator", 2006 IEEE INTERNATIONAL CONFERENCE ON ROBOTICS AND AUTOMATION (ICRA) : ORLANDO, FLORIDA, 15 - 19 MAY 2006, IEEE OPERATIONS CENTER, PISCATAWAY, NJ, 15 May 2006 (2006-05-15), pages 3512-3519, XP010921800, DOI: 10.1109/ROBOT.2006.1642238 ISBN: 978-0-7803-9505-3**

**Beschreibung**

Die Erfindung betrifft ein Verfahren zum Steuern eines Roboters, einen entsprechenden Datenspeicher und einen entsprechenden Roboter.

In vielen Bereichen der Technik und Industrie finden Roboter mit beweglichen Roboterarmen heutzutage zunehmend Verbreitung. Diese Roboter können beispielsweise Bauteile oder Werkzeuge an einer vorgegebenen Stelle und in einer vorgegebenen Orientierung oder Ausrichtung, also in einer vorgegebenen Pose, im Raum positionieren. Dies ist im Allgemeinen ein 6D-Problem, also ein Problem mit oder in 6 Dimensionen oder Freiheitsgraden. Dies sind drei Punkt- oder Raumkoordinaten für die Position und drei Winkel für die Orientierung. Ist das zu positionierende Werkzeug jedoch rotationssymmetrisch um eine, also bezüglich einer Symmetrieachse und/oder ist eine Rotation oder Drehstellung des Werkzeugs um eine bestimmte Achse für eine Anwendung oder Funktion des Werkzeugs unerheblich oder irrelevant, so handelt es sich effektiv um ein 5D-Problem. Ein herkömmlicher Ansatz in einem solchen Fall besteht darin, eine feste Rotation um die jeweilige bestimmte Achse vorzugeben, sodass sich eine 6D-Pose für das Werkzeug als anzufahrende Zielstellung ergibt. Für diese 6D-Pose wird dann mit herkömmlichen Verfahren eine entsprechende Steuersequenz für den Roboter bestimmt. Bei diesem Verfahren kann es nachteilig jedoch passieren, dass der Roboter die für das Werkzeug vorgegebene 6D-Pose, beispielsweise aufgrund von mechanischen Limitierungen, nicht einnehmen oder einstellen kann. Zudem werden automatisch andere mögliche Lösungen, also entsprechende Steuersequenzen, ausgeschlossen oder verworfen, welche gegebenenfalls zu einer verbesserten Performanz oder Effizienz führen könnten.

In der Druckschrift von Leontjevs et al., "Singularity Avoidance by Virtual Redundant Axis and its Application to Large Base Motion Compensation of Serial Robots", Proc. RAAD, 2012, 21, S. 77-84, wird ein Verfahren zur verbesserten Robotersteuerung einer Positionierung eines Werkzeugs mittels eines virtuellen Gelenks offenbart. Zudem offenbart die Druckschrift von Zhijun Li et al., "Motion Control of Nonholonomic Mobile Underactuated Manipulator", IEEE International Conference on Robotics and Automation, 2006, Orlando, Florida, S. 3512-1519, eine Erhöhung der Bewegungsfreiheitsgrade eines untersteuerten Roboterarms durch bewegungsgekoppelte Anbindung einer beweglichen Basis des Roboterarms mittels eines virtuellen Gelenks und virtuellen Verbindungselements an den Roboterarm.

Aufgabe der vorliegenden Erfindung ist es, eine Robotersteuerung für ein Positionieren eines Werkzeugs zu verbessern.

Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Zeichnungen angegeben.

Ein erfindungsgemäßes Verfahren dient zum Steuern eines Roboters zum automatischen Positionieren eines um eine vorgegebene Achse geometrisch und/oder funktionell rotationssymmetrischen Werkzeugs in einer 5D-Zielpose. Der Roboter weist dabei einen beweglichen Roboterarm auf, welcher endseitig, also an einem distalen Ende, einen Roboterflansch aufweist. An dem Roboterflansch wiederum ist das Werkzeug gehalten. Das Werkzeug kann dabei entweder direkt, also unmittelbar, oder indirekt, also mittelbar, an dem Roboterflansch gehalten sein. Mit anderen Worten kann also das Werkzeug selbst an dem Roboterflansch befestigt sein. Ebenso kann aber beispielsweise ein Werkzeughalter oder ein Verbindungselement an dem Roboterflansch direkt befestigt und das Werkzeug an diesem Werkzeughalter oder Verbindungselement befestigt sein. Im Sinne der vorliegenden Erfindung soll auch diese mittelbare Anordnung bedeuten, dass das Werkzeug an dem Roboterflansch gehalten ist. Der Begriff "Werkzeug" ist im Sinne der vorliegenden Erfindung zudem sehr breit auszulegen und kann prinzipiell jegliche von oder an dem Roboter beziehungsweise Roboterflansch gehaltene oder geführte Objekte, also beispielsweise auch ein Werkstück oder Halbzeug oder dergleichen umfassen. Das Werkzeug kann also ebenso ein Bauteil oder Gerät oder dergleichen sein.

Als Teil des erfindungsgemäßen Verfahrens werden 3D-Punktkoordinaten oder 3D-Raumkoordinaten eines Referenzpunktes des Werkzeugs, eine Achse des Werkzeugs und eine Orientierung dieser Achse als Teil der 5D-Zielpose für das Werkzeug vorgegeben. Die Orientierung kann dabei beispielsweise in Form von zwei Winkeln oder in Form von zwei Richtungen oder Richtungsvektoren, welche beispielsweise senkrecht zu der vorgegebenen Achse und zueinander sein können, vorgegeben werden. Die 5D-Zielpose für das Werkzeug wird also als 5D-Pose vorgegeben, wobei eine Winkelstellung des Werkzeugs bezüglich einer Rotation um die vorgegebene Achse zunächst nicht spezifiziert werden muss. Anschließend wird zu dieser vorgegebenen 5D-Zielpose für das Werkzeug mittels an sich bekannter Methoden eine korrespondierende 6D-Pose für den Roboterflansch bestimmt. Dies bedeutet, dass die 6D-Pose des Roboterflansches automatisch so bestimmt wird, dass sich das an dem Roboterflansch gehaltene Werkzeug in der für dieses vorgegebenen 5D-Zielpose befindet, wenn der Roboterflansch sich in der für diesen bestimmten korrespondierenden 6D-Pose befindet. Dazu kann eine räumliche Lagebeziehung zwischen dem Werkzeug und dem Roboterflansch beziehungsweise zwischen dem Roboterflansch einerseits und dem Referenzpunkt sowie der vorgegebenen Achse des Werkzeugs andererseits vorgegeben, also bekannt, insbesondere fest oder konstant, sein.

Die vorgegebene Achse des Werkzeugs ist eine Symmetrieachse des Werkzeugs. Der Begriff "Symmetrieachse" kann dabei im Sinne der vorliegenden Erfindung sowohl geometrisch als funktionell verstanden und verwendet werden. Allgemein kann das erfindungsgemäße Verfahren also besonders vorteilhaft zum Positionieren eines Werkzeugs angewendet werden, welches rotationssymmetrisch ist und/oder dessen Funktion, Anwendung oder Einsatz von der Rotation oder Drehstellung bezüglich zumindest einer, nämlich zumindest der vorgegebenen Achse bei dem Positionieren nicht abhängt, also nicht beeinflusst oder nicht beeinträchtigt wird, wenn das Werkzeug also in der 5D-Zielpose beliebig um die vorgegebene Achse rotiert sein darf. Die entsprechende Achse kann also in geometrischer und/oder in funktioneller Hinsicht eine Symmetrieachse sein. Der gegebenenfalls im Folgenden verwendete Begriff "Symmetrieachse" ist also nicht rein geometrisch zu verstehen. Ebenso kann beispielsweise eine diskrete Symmetrie hinsichtlich Rotationen um diese Achse gegeben sein, sodass also nur Rotationen um bestimmte diskrete Winkelbeträge zu einer geometrischen Entsprechung der jeweiligen Stellungen des Werkzeugs führen. Ebenso kann es möglich sein, dass das Werkzeug um die entsprechende Achse rotierbar oder drehbar von dem Roboter, insbesondere an dem Roboterflansch, gehalten ist. Das Werkzeug kann dann beispielsweise von einem Benutzer oder Anwender nach dem Positionieren des Werkzeugs in der vorgegebenen 5D-Zielpose manuell in eine gewünschte Rotations- oder Drehstellung bewegt werden. Das Verfahren kann also letztlich zum Positionieren beliebiger Werkzeuge oder Gegenstände angewendet werden.

In einem weiteren Verfahrensschritt wird eine vorgegebene Kinematik des Roboters durch Ergänzen eines in dem Werkzeug angeordneten oder positionierten virtuellen Gelenks erweitert, also augmentiert. Die vorgegebene Kinematik des Roboters kann etwa ein Kinematikmodell des Roboters sein, welches eine relative Lage beziehungsweise ein Zusammenwirken von realen Gelenken und Verbindungselementen zwischen diesen Gelenken definiert oder beschreibt. Dieser Kinematik oder diesem Kinematikmodell des Roboters wird dann virtuell, also rechnerisch oder durch eine entsprechende Datenverarbeitung das virtuelle Gelenk hinzugefügt. Das virtuelle Gelenk ist dabei ein rotatorisches oder Drehgelenk, welches eine einschränkungsfreie Rotation in der oder um die vorgegebene Achse oder Symmetrieachse des Werkzeugs ermöglicht. Zusätzlich zu dem virtuellen Gelenk wird ein virtuelles Verbindungselement vorgegeben, welches das virtuelle Gelenk mit dem Referenzpunkt und/oder mit einer von dem Roboterflansch abgewandten Spitze des Werkzeugs verbindet. Da es sich lediglich um ein virtuelles, also rechnerisch vorgegebenes oder modelliertes Gelenk handelt, unterliegt dieses beziehungsweise dessen Rotation, also ein maximaler Rotationswinkel oder Bewegungsumfang keinerlei physischen Limitierungen, wie dies bei den realen Gelenken des Roboters der Fall sein kann. Das Erweitern der vorgegebenen Kinematik des Roboters kann dabei ebenso an anderer Stelle des erfindungsgemäßen Verfahrens, also beispielsweise vor den bereits beschriebenen Verfahrensschritten durchgeführt werden.

Mit anderen Worten wird der reale Roboter virtuell also um ein zusätzliches virtuelles Glied des beweglichen Roboterarms erweitert. Dadurch können Rotationen des virtuellen Gelenks besonders zuverlässig und konsistent durch bekannte Robotersteuerungen oder Kinematikmodelle durchgeführt beziehungsweise verarbeitet werden. Zudem kann so in dem jeweiligen Modell des Roboters der Referenzpunkt beziehungsweise die Spitze des Werkzeugs zuverlässig und konsistent auch bei einer Rotation des virtuellen Gelenks gemäß der vorgegebenen 5D-Zielpose positioniert werden. Damit kann also auf besonders einfache Weise eine Fehlerquelle vermieden werden, die darin liegen könnte, dass ein Verhalten des Referenzpunktes bei einer Rotation des virtuellen Gelenks in dem jeweiligen Modell unbestimmt ist, da erst durch das virtuelle Verbindungselement der Referenzpunkt beziehungsweise die Spitze des Werkzeugs an das virtuelle Gelenk gekoppelt wird. Vorteilhaft ist dabei kein zusätzlicher Bauteilaufwand notwendig, da das virtuelle Verbindungselement rein rechnerisch also durch eine entsprechende Datenverarbeitung oder Modellierung, eben virtuell, vorgegeben, also ergänzt wird, sodass keine Veränderungen an dem realen Roboter notwendig sind.

In einem weiteren Verfahrensschritt werden die bestimmte 6D-Pose des Roboterflansches und die erweiterte Kinematik an ein automatisches Pfad-Planungsmodul, auch bezeichnet als automatischer Pfad-Planer, bereitgestellt. Mittels des automatischen Pfad-Planungsmoduls wird dann automatisch ein Pfad bestimmt, gemäß welchem aus einer jeweils aktuellen Ausgangspose des Roboters die bestimmte 6D-Pose des Roboterflansches angefahren oder eingestellt werden kann. Dabei auftretende Konflikte mit einem maximalen physischen Bewegungsumfang des Roboters werden dabei von dem automatischen Pfad-Planungsmodul automatisch durch wenigstens eine Rotation des virtuellen Gelenks gelöst. Mit anderen Worten wird es also dem Pfad-Planungsmodul überlassen, eine geeignete Rotation oder Winkelstellung für das virtuelle Gelenk zu finden oder zu bestimmen, um das Werkzeug in der vorgegebenen 5D-Zielpose zu positionieren. Die jeweils aktuelle Ausgangslage des Roboters kann beispielsweise automatisch von einer Robotersteuerung bestimmt werden, beispielsweise durch Auslesen aktueller Gelenkstellungen oder Gelenkvariablen und/oder anhand eines vorgegebenen Modells des Roboters.

Derartige automatische Pfad-Planungsmodule sind grundsätzlich bekannt und werden bereits heutzutage vielfach für bekannte Robotersteuerungen eingesetzt. Das Pfad-Planungsmodul stellt dabei zunächst sicher, dass ein zu dem realen Roboter beziehungsweise zu den realen Gelenken des Roboters korrespondierender Anteil des bestimmten Pfades kollisions- und konfliktfrei ist, also unter Berücksichtigung physischer oder physikalischer Limitierungen und Begrenzungen des Roboters selbst und/oder gegebenenfalls von dessen Umgebung durch den Roboter angefahren, also eingestellt oder erreicht werden kann. Da das zusätzliche virtuelle Gelenk keinerlei physische Einschränkungen unterliegt, kann dann durch eine letztlich rein virtuelle oder rechnerische Rotation des virtuellen Gelenks um die vorgegebene Achse des Werkzeugs die vorgegebene 5D-Zielpose eingestellt oder erreicht werden. Dies ist insbesondere auch dann der Fall, wenn der reale Roboter diese virtuelle Rotation um die vorgegebene Achse - beispielsweise aufgrund mechanischer Beschränkungen - nicht ausführen oder nachvollziehen kann. Da jedoch die 5D-Zielpose für das Werkzeug aufgrund von dessen zumindest funktioneller und gegebenenfalls geometrischer Rotationssymmetrie letztlich eine 5D-Pose ist, kann diese unabhängig von der Rotation des virtuellen Gelenks eingestellt oder beibehalten werden. Mit anderen Worten nutzt das erfindungsgemäße Verfahren also vorteilhaft den Umstand der funktionellen und gegebenenfalls geometrischen Rotationssymmetrie des Werkzeugs aus, um durch die situations- oder bedarfsgerecht beliebige Einstellbarkeit des Rotationswinkels des virtuellen Gelenks die letztlich nur in fünf Dimensionen oder Freiheitsgraden beschränkte 5D-Zielpose für das Werkzeug zu erreichen beziehungsweise deren Erreichbarkeit zu ermöglichen. Dadurch ermöglicht es die vorliegende Erfindung vorteilhaft, flexibler und zuverlässiger als herkömmliche Verfahren einen praktikablen, also praktisch ausführbaren, Pfad für den Roboter zum Positionieren des Werkzeugs in der vorgegebenen 5D-Zielpose zu finden. Der bestimmte Pfad unterliegt dabei vorteilhaft nicht den Einschränkungen der herkömmlich verwendeten Verfahren. Dadurch kann in einer größeren Anzahl von Situationen oder Fällen eine Lösung für das jeweilige Positionierungsproblem gefunden werden, welche den mechanischen Limitierungen des Roboters Rechnung trägt. Zudem kann gegebenenfalls eine praktisch umsetzbare Lösung mit optimierter Performanz gefunden werden.

Das erfindungsgemäße Verfahren kann für unterschiedlichste Arten von Robotern und in unterschiedlichsten technischen oder industriellen Anwendungsgebieten vorteilhaft, also nutzbringend, eingesetzt werden. Der Roboter kann also beispielsweise ein Industrieroboter, ein Leichtbauroboter, ein medizinischer Roboter oder dergleichen sein. Derartige Roboter können heutzutage üblicherweise beispielsweise wenigstens sechs Freiheitsgrade, also entsprechende Gelenke oder Achsen, aufweisen. Entsprechend kann das Werkzeug wie beschrieben letztlich ein nahezu beliebiges Objekt sein. Ein besonders vorteilhafter Anwendungsfall der vorliegenden Erfindung liegt in dem Positionieren einer Führungshülle für eine Nadel oder einen Injektor oder dergleichen (NGS, englisch: "Needle-guide sheath"). Durch eine solche Führungshülle kann eine Nadel oder ein Injektor oder dergleichen geführt werden - beispielsweise im Rahmen einer interventionellen Behandlung eines Patienten. Durch eine präzise Positionierung der Führungshülle, also des Werkzeugs, kann dabei ein vorgegebener Zielpunkt in oder an dem Patienten in oder aus einer vorgegebenen Richtung besonders genau und zuverlässig durch die Nadel oder den Injektor erreicht werden. Die Führungshülle weist dabei einen Innen- oder Hohlraum auf, entlang dessen die vorgegebene Achse verläuft. Durch diesen Innen- oder Hohlraum wird die Nadel oder der Injektor entlang der vorgegebenen Achse geführt. Dazu ist es in funktioneller Hinsicht offensichtlich irrelevant, ob oder wie weit die Führungshülle um die vorgegebene Achse rotiert ist, wenn die Nadel oder der Injektor entlang dieser vorgegebenen Achse durch die Führungshülle in Richtung des Patienten oder Zielobjekts geführt wird. Die Führungshülle ist also funktionell oder funktional rotationssymmetrisch bezüglich dieser Achse. Je nach Ausgestaltung der Führungshülle kann diese auch geometrisch rotationssymmetrisch bezüglich dieser Achse sein. Dies kann ebenso beispielsweise nur für den Innen- oder Hohlraum gelten. Ein typischer Anwendungsfall für eine derartige Führungshülle kann beispielsweise eine Wirbelsäulenbehandlung oder - operation sein. Die für die Führungshülle beschrieben Symmetrieeigenschaften können in entsprechender Weise auf andere Werkzeuge übertragen oder verallgemeinert werden.

Es sei dabei betont, dass das erfindungsgemäße Verfahren selbst keinen chirurgischen Schritt umfasst und das Werkzeug insbesondere außerhalb des Patienten positioniert wird, also nicht mit diesem in Kontakt kommt. Die eigentliche Interaktion mit dem Patienten kann durch die Nadel oder den Injektor erfolgen, welche nicht Teil des erfindungsgemäßen Verfahrens sind. Das erfindungsgemäße Verfahren befasst sich lediglich mit der Steuerung, also mit dem Betrieb des Roboters. Eine direkte chirurgische Anwendung der Erfindung ist hier also nicht beansprucht, kann also ausgeschlossen sein.

In vorteilhafter Ausgestaltung der vorliegenden Erfindung wird der bestimmte Pfad automatisch an ein Steuergerät des Roboters übermittelt oder bereitgestellt. Der Roboter wird dann mittels des Steuergerätes gemäß dem bestimmten Pfad automatisch angesteuert, sodass der Roboterflansch in die für diesen bestimmte Pose und somit das Werkzeug in die vorgegebene 5D-Zielpose gelangt. Mit anderen Worten wird also nach einem Empfangen der vorgegebenen 5D-Zielpose für das Werkzeug der Roboter automatisch gesteuert und in die 5D-Zielpose bewegt oder überführt. Dazu können beispielsweise das Erweitern der vorgegebenen Kinematik und das Bereitstellen der bestimmten 6D-Pose sowie der erweiterten Kinematik an das automatische Pfad-Planungsmodul automatisiert durchgeführt werden. Entsprechende Daten können beispielsweise in einem mit dem Steuergerät verbundenen Datenspeicher abgelegt und aus diesem durch das Steuergerät automatisch abgerufen werden. Der Datenspeicher und/oder das automatische Pfad-Planungsmodul können dabei ebenso Teil des Steuergeräts sein. Das Übermitteln des bestimmten Pfades an das Steuergerät kann dann bedeuten, dass der bestimmte Pfad an ein weiteres Modul oder eine entsprechende Funktion oder Funktionseinheit des Steuergeräts übergeben wird. Das Steuergerät kann Teil des Roboters oder Teil eines größeren Robotersystems sein. Das Steuergerät kann beispielsweise in den Roboter selbst integriert oder beispielsweise in einem eigenen Gehäuse angeordnet sein. Durch die vorteilhafte Flexibilität und Zuverlässigkeit des erfindungsgemäßen Verfahrens zum oder beim Auffinden eines mechanisch zulässigen Pfades für den Roboter zum Positionieren des Werkzeugs in der vorgegebenen 5D-Zielpose kann das erfindungsgemäße Verfahren vorteilhaft besonders weitgehend automatisiert werden.

In weiterer vorteilhafter Ausgestaltung der vorliegenden Erfindung werden automatisch jeweils aktuelle Werte von Gelenkvariablen q der realen Gelenke des Roboters in der Ausgangspose bestimmt, als Teil der erweiterten Kinematik ein Satz von Gelenkvariablen (q, $q_v$) bereitgestellt und von dem automatischen Pfad-Planungsmodul als Teil des Pfades ein Satz von Ziel-Gelenkvariablen (q*, $q_v$*) bestimmt, die in der 5D-Zielpose vorliegen, also erreicht werden sollen. Der untere Index "v" bezeichnet dabei das virtuelle Gelenk, während der obere Index "*" die zu der vorgegebenen 5D-Zielpose korrespondierenden Zielwerte der jeweiligen Gelenkvariablen bezeichnet. Die Gelenkvariablen q, $q_v \in \mathbb{R}^n$ können als Koordinaten in einem abstrakten Raum, in dem die Gelenke repräsentiert werden, verwendet werden. Dieser Raum wird auch als Gelenk- oder Konfigurationsraum bezeichnet. Die Dimension n dieses Konfigurationsraumes entspricht einer Anzahl n der unabhängigen Gelenke und damit einer Anzahl der Freiheitsgrade des Roboters. Der Konfigurationsraum des realen Roboters kann also die Dimension n haben, während ein virtueller Roboter, der dem um das virtuelle Gelenk ergänzten realen Roboter entspricht, einen Konfigurationsraum der Dimension n+1 haben kann. Die Gelenkvariablen q, $q_v$ können beispielsweise die jeweiligen Stellungen, also die Winkel- und/oder Verschiebestellungen, der jeweiligen Gelenke umfassen oder angeben. Die Verwendung der Gelenkvariablen q, $q_v$ ermöglicht es dabei vorteilhaft, auf besonders einfache Weise eine Kompatibilität des erfindungsgemäßen Verfahrens mit herkömmlichen Robotersteuerungen zu erreichen.

In weiterer vorteilhafter Ausgestaltung der vorliegenden Erfindung wird als die Position des virtuellen Gelenks ein Mittelpunkt des Werkzeugs vorgegeben. Mit anderen Worten wird also das virtuelle Gelenk in der Mitte des Werkzeugs positioniert beziehungsweise als Ankerpunkt des virtuellen Gelenks der Mittelpunkt des Werkzeugs vorgegeben. Grundsätzlich könnte das virtuelle Gelenk zwar an beliebiger Stelle des Werkzeugs positioniert werden, die Positionierung oder Anordnung des virtuellen Gelenks in oder an dem Mittelpunkt des Werkzeugs kann jedoch vorteilhaft besonders einfach und anschaulich sein, also eine besonders einfache Berechnung ermöglichen und eine anschauliche Verständlichkeit eines entsprechenden Modells, einer entsprechenden Berechnung und/oder eines entsprechenden Ergebnisses verbessern. Durch die Anordnung des virtuellen Gelenks in dem Mittelpunkt des Werkzeugs kann die virtuelle Rotation um die vorgegebene Achse oder Symmetrieachse des Werkzeugs zudem besonders zuverlässig und konsistent durchgeführt beziehungsweise modelliert werden, da auch die vorgegebene Achse des Werkzeugs durch den Mittelpunkt des Werkzeugs verläuft. Der Mittelpunkt des Werkzeugs kann dabei auf eine oder mehrere, insbesondere alle, Richtungen oder Dimensionen des Werkzeugs bezogen sein.

In weiterer vorteilhafter Ausgestaltung der vorliegenden Erfindung wird als der Referenzpunkt des Werkzeugs eine von dem Roboterflansch abgewandte Spitze des Werkzeugs verwendet. Mit anderen Worten wird also für die 5D-Zielpose oder als Teil der 5D-Zielpose für das Werkzeug vorgegeben, an welchem Punkt im Raum sich die Spitze des Werkzeugs befinden soll, wenn das Werkzeug in der 5D-Zielpose positioniert ist. Grundsätzlich könnte als dieser Referenzpunkt zwar ein beliebiger Punkt des Werkzeugs vorgegeben werden, die Verwendung der Spitze des Werkzeugs ist jedoch besonders vorteilhaft, da hierdurch besonders zuverlässig ein versehentlicher oder unerwünschter Kontakt des Werkzeugs mit einem Zielobjekt, beispielsweise dem Patienten oder einem zu bearbeitendes Werkstück, vermieden werden kann. Würde stattdessen beispielsweise ein dem Roboterflansch zugewandtes Ende oder ein zwischen diesen Enden liegender Punkt des Werkzeugs als der Referenzpunkt vorgegeben werden, so könnte eine Fehlerquelle darin bestehen, dass ein jeweiliger Benutzer dies beim Vorgeben der 3D-Raumkoordinaten des Referenzpunktes nicht berücksichtigt. Dadurch würde dann die Spitze des Werkzeugs näher als eigentlich beabsichtigt an dem Zielobjekt positioniert werden, nämlich gerade um einen Abstand zwischen dem Referenzpunkt und der Spitze des Werkzeugs. Durch die Verwendung der Spitze des Werkzeugs als Referenzpunkt kann so also eine besonders einfache und sichere Bedienbarkeit, also Anwendung der vorliegenden Erfindung ermöglicht werden. Dabei wird vorliegend davon ausgegangen, dass die von dem Roboterflansch abgewandte Spitze des Werkzeugs in der vorgegebenen 5D-Zielpose dem jeweiligen Zielobjekt zugewandt ist, insbesondere also einen dem Zielobjekt nächstliegenden Punkt des Werkzeugs bilden kann.

In einer alternativen vorteilhaften Ausgestaltung der vorliegenden Erfindung wird als die Position des virtuellen Gelenks der Referenzpunkt des Werkzeugs vorgegeben. Hierdurch kann sich vorteilhaft eine besonders einfache und aufwandsarme Berechnung des Pfades beziehungsweise eine besonders aufwandsarme Modellierung des Roboters ergeben.

In weiterer vorteilhafter Ausgestaltung der vorliegenden Erfindung wird dem automatischen Pfad-Planungsmodul eine Nebenbedingung übergeben, welche von dem automatischen Pfad-Planungsmodul beim Bestimmen des Pfades durch wenigstens eine virtuelle Rotation des virtuellen Gelenks automatisch eingehalten wird, sofern dabei kein Konflikt mit einer physischen Limitierung des Roboters auftritt. Die Nebenbedingung kann insbesondere eine Eigenschaft einer Pose des Roboterarms bei Erreichen der 5D-Zielpose durch das Werkzeug sein oder charakterisieren. Mit anderen Worten wird also die Freiheit oder Unbestimmtheit der 5D-Zielpose für das Werkzeug hinsichtlich der Winkelstellung oder Rotation um die vorgegebene Achse oder Symmetrieachse des Werkzeugs ausgenutzt, um stattdessen die Nebenbedingung, also eine weitere oder andere Rand- oder Zwangsbedingung, vorzugeben. So kann als Nebenbedingung beispielsweise vorgegeben werden, dass sich ein bestimmtes Glied des beweglichen Roboterarms in eine bestimmte Richtung oder in einen bestimmten Raumbereich erstrecken soll oder ein bestimmter Raumbereich freigehalten, also nicht von dem Roboterarm eingenommen werden soll. Derartige zusätzliche Vorgaben oder Bedingungen können bei einer vollständigen, starren Definition der 5D-Zielpose in sechs Dimensionen dazu führen, dass diese durch den Roboter nicht erreicht oder eingestellt werden kann. Im vorliegenden Fall kann jedoch die Einschränkungsfreiheit des virtuellen Gelenks ausgenutzt werden, um die Nebenbedingung einzuhalten. Dadurch kann vorteilhaft beispielsweise eine Zusammenarbeit zwischen dem Roboter und menschlichem Personal verbessert, insbesondere vereinfacht und/oder sicherer gestaltet werden. Ebenso kann beispielsweise eine Handhabung oder Positionierung des Zielobjekts vereinfacht werden, da beispielsweise ein bestimmter Raumbereich freigehalten werden kann, wodurch eine Zugänglichkeit des Zielobjekts erleichtert werden kann.

Ein weiterer Aspekt der vorliegenden Erfindung ist ein Datenspeicher mit einem Programmcode, der die Verfahrensschritte wenigstens einer Ausführungsform des erfindungsgemäßen Verfahrens kodiert oder repräsentiert.

Ein weiterer Aspekt der vorliegenden Erfindung ist ein Roboter mit einem beweglichen Roboterarm, welcher endseitig einen Roboterflansch zum Halten eines, insbesondere um eine vorgegebene Achse funktionell rotationssymmetrischen, Werkzeugs aufweist. Weiterhin weist der erfindungsgemäße Roboter ein Steuergerät auf, welches eine Schnittstelle zum Empfangen von Vorgaben, einen erfindungsgemäßen Datenspeicher und eine mit diesem und der Schnittstelle verbundene Prozessoreinrichtung zum Ausführen des in dem Datenspeicher gespeicherten Programmcodes umfasst. Mit anderen Worten ist der erfindungsgemäße Roboter also zum Ausführen oder Durchführen zumindest einer Ausführungsform des erfindungsgemäßen Verfahrens eingerichtet. Dementsprechend kann der im Zusammenhang mit dem erfindungsgemäßen Verfahren genannte Roboter insbesondere der erfindungsgemäße Roboter sein oder diesem entsprechen. Dementsprechend kann der erfindungsgemäße Roboter die im Zusammenhang mit dem erfindungsgemäßen Verfahren genannten Eigenschaften und/oder Bauteile oder Einrichtungen aufweisen.

Die bisher und im Folgenden angegebenen Eigenschaften und Weiterbildungen des erfindungsgemäßen Verfahrens sowie die entsprechenden Vorteile sind jeweils sinngemäß auf die anderen Aspekte der Erfindung, also auf den erfindungsgemäßen Datenspeicher und den erfindungsgemäßen Roboter, und/oder zur Durchführung des erfindungsgemäßen Verfahrens verwendete oder verwendbare Bauteile und Einrichtungen übertragbar und umgekehrt. Es gehören also zu der Erfindung auch solche Weiterbildungen der einzelnen Aspekte der Erfindung, welche Ausgestaltungen aufweisen, die hier beispielsweise nur für einen dieser Aspekte und/oder nicht explizit in der jeweiligen Kombination beschrieben sind.

Weitere Merkmale, Einzelheiten und Vorteile der vorliegenden Erfindung ergeben sich aus der nachfolgenden Beschreibung bevorzugter Ausführungsbeispiele sowie anhand der Zeichnungen. Dabei zeigen:

FIG 1   eine schematische Perspektivansicht eines Roboters; und

FIG 2   einen beispielhaften schematischen Ablaufplan eines Verfahrens zum Steuern des Roboters auf FIG 1.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

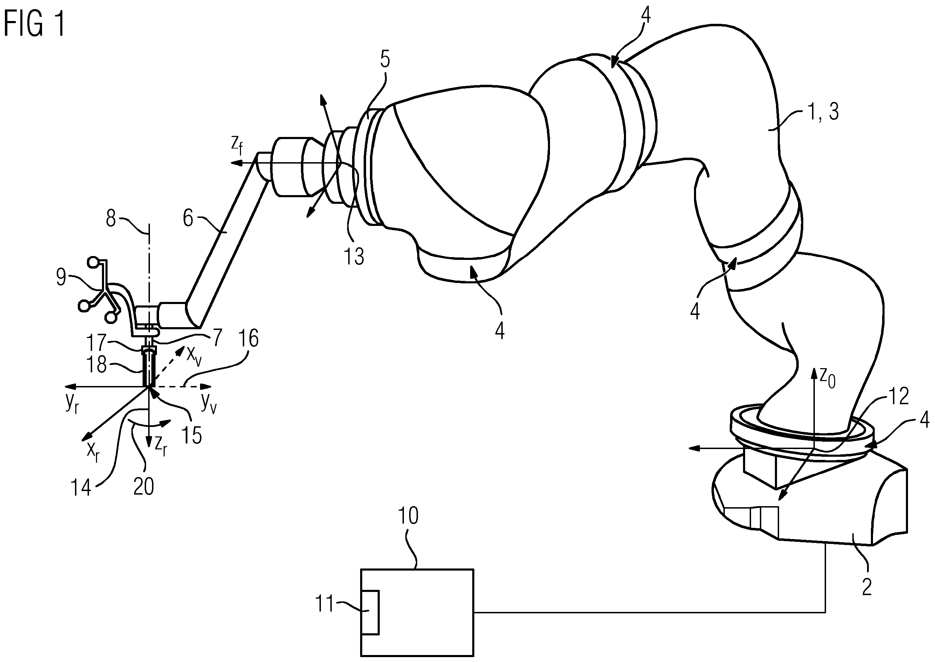

Fig. 1 zeigt eine schematische perspektivische Ansicht eines Roboters 1 mit einem Roboterfuß 2 und einem sich an diesen anschließenden beweglichen Roboterarm 3. Der Roboterfuß ist vorliegend ortsfest angeordnet in Bezug auf ein umgebendes Raumkoordinatensystem, also in Bezug auf einen umgebenden Raum, in dem sich der Roboter 1 befindet. Der bewegliche Roboterarm 3 weist mehrere Gelenke 4 auf, von denen hier einige beispielhaft gekennzeichnet sind. An einem distalen, also dem Roboterfuß 2 gegenüberliegenden oder abgewandten Ende des beweglichen Roboterarms 3 ist ein Roboterflansch 5 angeordnet. An diesem Roboterflansch 5 ist vorliegend ein Werkzeughalter 6 befestigt, an welchem oder durch welchen wiederum ein Werkzeug 7 gehalten ist. Das Werkzeug 7 ist vorliegend eine Nadel-Führungshülle (NGS), welche zumindest funktionell und je nach Ausgestaltung beispielsweise auch geometrisch rotationssymmetrisch um eine hier schematisch angedeutete vorgegebene Achse ausgebildet ist, welche hier entsprechend also Symmetrieachse 8 bezeichnet wird. Die Symmetrieachse 8 erstreckt sich dabei in Längsrichtung zentral durch das Werkzeug 7 entlang von dessen Haupterstreckungsrichtung.

Im vorliegenden Beispiel ist zudem ein an dem Werkzeug 7 befestigter optischer Marker 9 dargestellt. Dieser Marker 9 kann mittels einer Erfassungseinrichtung, beispielsweise mittels einer Kamera, erfasst werden, um aus jeder Perspektive eine jeweils aktuelle Orientierung des Markers 9 und damit des Werkzeugs 7 zu bestimmen beziehungsweise nachzuverfolgen. Weiterhin ist schematisch ein mit dem Roboter 1 verbundenes Steuergerät 10 dargestellt. Das Steuergerät 10 kann ebenso Teil des Roboters 1 sein. Das Steuergerät 10 weist ein Benutzerinterface 11 auf, über welches Benutzereingaben oder Vorgaben empfangen werden können. Nicht dargestellt umfasst das Steuergerät 10 eine Datenverarbeitungseinrichtung, welche über das Benutzerinterface 11 empfangene Eingaben oder Vorgaben verarbeitet und ein entsprechendes Steuersignal für den Roboter 1 erzeugen und schließlich gemäß diesem Steuersignal den Roboter 1 ansteuern kann.

Zur Orientierung oder Veranschaulichung sind vorliegend einige kartesische Koordinatensysteme dargestellt, welche bei der Steuerung des Roboters 1 beziehungsweise beim Bestimmen oder Erzeugen des Steuersignals für den Roboter 1 berücksichtigt oder verwendet werden können. Vorliegend sind dies ein Basiskoordinatensystem 12, dessen Ursprung an dem Roboterfuß 2 angeordnet ist. Das Basiskoordinatensystem 12 ist dabei rotations- und ortsfest relativ zu dem Roboterfuß 2. An dem Roboterflansch 5 ist ein Flanschkoordinatensystem 13 dargestellt, welches eine Pose des Roboterflansches 5 angibt beziehungsweise in welchem eine Pose des Roboterflansches 5 ohne weitere Koordinatentransformationen ausgedrückt werden kann. An einer von dem Roboterflansch 5 abgewandten Spitze des Werkzeugs 7 ist ein Werkzeugkoordinatensystem 14 dargestellt. Ein Ursprung des Werkzeugkoordinatensystem 14 fällt dabei mit der Spitze des Werkzeugs 7 zusammen und eine z-Achse $z_r$ des Werkzeugkoordinatensystem 14 fällt mit der Symmetrieachse 8 des Werkzeugs 7 zusammen. Durch die oder anhand der Orientierungen der x- und y-Achsen $x_r$ beziehungsweise $y_r$ des Werkzeugkoordinatensystems 14 kann eine Rotation oder Winkelstellung des Werkzeugs 7 um die Symmetrieachse 8, also um die z-Achse $z_r$ des Werkzeugkoordinatensystems 14 angegeben oder beschrieben werden. Weiterhin angedeutet ist eine 5D-Zielpose 16 für das Werkzeug 7 durch entsprechende Orientierungen der x- und y, Achsen des Werkzeugkoordinatensystem 14, hier bezeichnet als $x_v$ beziehungsweise $y_v$.

Ziel ist es letztlich, den Roboter 1 so anzusteuern oder zu bewegen, dass das Werkzeug 7 gemäß der 5D-Zielpose 16 positioniert wird. Dazu soll eine entsprechende, zu der 5D-Zielpose 16 für das Werkzeug 7 korrespondierende Pose für den Roboterflansch 5 gefunden werden. Es soll also ermöglicht werden, den Roboter 1 automatisch so zu positionieren, dass das Werkzeug 7 in die 5D-Zielpose 16 gelangt oder überführt wird. Wenn diese 5D-Zielpose 16 erreicht ist, kann beispielsweise eine Nadel durch das Werkzeug 7 entlang der Symmetrieachse 8 geführt werden, um einen bestimmten Zielpunkt aus einer bestimmten Richtung zu erreichen. Dafür ist die Rotation oder Winkelstellung des Werkzeugs 7 um die Symmetrieachse 8 zwar letztlich unerheblich, die korrespondierende Pose des Roboterflansches 5 muss jedoch vollständig, also in sechs Dimensionen bestimmt sein. Eine solche 6D-Pose für den Roboterflansch 5 anhand einer vorgegebenen 5 die-Pose für das Werkzeug 7 zu finden ist allerdings ein offenes Problem mit potenziell einer Vielzahl von möglichen Lösungen, was beispielsweise hinsichtlich einer Berechnungsgeschwindigkeit problematisch sein kann.

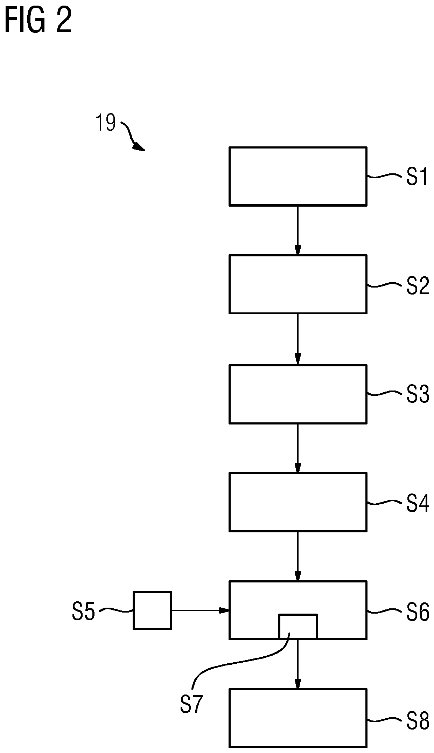

Fig. 2 zeigt einen beispielhaften schematischen Ablaufplan 19 eines Verfahrens zum Steuern des Roboters 1 zum automatischen Positionieren Werkzeugs 7 in der 5D-Zielpose 16. Dieses Verfahren nutzt dabei vorliegend vorteilhaft aus, dass das Werkzeug 7 in oder mit beliebiger Winkelstellung hinsichtlich einer Rotation um die vorgegebene Symmetrieachse 8 in der 5D-Zielpose 16 positioniert werden kann ohne hierdurch eine Anwendung, Nutzung oder Funktion des Werkzeugs 4 zu beeinträchtigen.

Das Verfahren beginnt in einem Verfahrensschritt S1. Hier kann etwa der Roboter 1 beziehungsweise das Steuergerät 10 aktiviert werden. Ebenso können beispielsweise die Koordinatensysteme 12, 13, 14 vorgegeben oder definiert werden. Weiterhin kann ein Kinematikmodell des Roboters 1 bereitgestellt werden. Ebenso kann das Steuergerät 10 eine aktuelle Pose, also eine jeweilige Ausgangspose, des Roboters 10 bestimmen, beispielsweise durch Abfragen aktueller Gelenksstellungen oder Gelenkvariablen der Gelenke Q des Roboters 1.

In einem Verfahrensschritt S2 wird die 5D-Zielpose 16 vorgegeben, in dem 3D-Raumkoordinaten eines Referenzpunktes 15 des Werkzeugs 7 - vorliegend der von dem Roboterflansch 5 abgewandten Spitze des Werkzeugs 7 - und eine Orientierung der Symmetrieachse 8, also der Z-Achse zr des Werkzeugkoordinatensystem 14, vorgegeben oder definiert werden.

In einem Verfahrensschritt S3 wird eine erweiterte Kinematik des Roboters 1 erzeugt, indem eine vorgegebene Kinematik des Roboters 1 um ein virtuelles Gelenk 17 und ein virtuelles Verbindungselement 18 ergänzt wird. Die vorgegebene Kinematik beschreibt dabei ein Verhalten der realen Gelenke 4 des Roboters 1. Das virtuelle Gelenk 17 existiert hingegen an dem realen Roboter 1 nicht. Das virtuelle Gelenk 17 ermöglicht virtuell, also in einem entsprechenden Modell, eine einschränkungsfreie Rotation um die Symmetrieachse 8. Das virtuelle Verbindungselement 18 verbindet das virtuelle Gelenk 17 mit dem Referenzpunkt 15, also mit der Spitze des Werkzeugs 7.

In einem Verfahrensschritt S4 wird eine zu der vorgegebenen 5D-Zielpose 16 korrespondierende 6D-Pose für den Roboterflansch 5 bestimmt.

Die vorgegebene 5D-Zielpose 16 und die bestimmte korrespondierende 6D-Pose für den Roboterflansch 5 werden dann einem automatischen Pfad-Planungsmodul des Steuergerätes 10 bereitgestellt.

In einem Verfahrensschritt S5 wird dem automatischen Pfad-Planungsmodul zudem eine vorgegebene Nebenbedingung für eine Pose des Roboters 1 vorgegeben, welche der Roboter 1 einnimmt, wenn er das Werkzeug 7 in der vorgegebenen 5D-Zielpose 16 positioniert hat.

In einem Verfahrensschritt S6 wird mittels des automatischen Pfad-Planungsmodul unter Berücksichtigung der Nebenbedingung, der erweiterten Kinematik und der 6D-Pose für den Roboterflansch ein Pfad bestimmt, gemäß welchem aus der Ausgangspose des Roboters 1 die bestimmte 6D-Pose des Roboterflansches 5 angefahren oder eingestellt werden kann. Sei $q = (q_1, q_2, ..., q_n) \in \mathbb{R}^n$ ein Vektor, welcher die Gelenkvariablen der realen Gelenke 4 des Roboters 1 angibt. Im vorliegenden Beispiel soll der Roboter 1 ein Leichtbauroboter mit sieben Gelenken 4 sein, sodass also gilt n = 7. Sei weiter $\bar{\bar{q}} = (q, q_v) \in \mathbb{R}^{n+1}$ ein Vektor, welcher die Gelenkkoordinaten der erweiterten Kinematik angibt oder repräsentiert. Durch $q_v \in \mathbb{R}$ wird also das virtuelle Gelenk 17 eingeführt oder ergänzt. Das automatische Pfad-Planungsmodul kann dann durch Anwendung an sich auf dem Gebiet der Robotersteuerung bekannter Methoden einen Pfad $(q^*, q_v^*) \in \mathbb{R}^{n+1}$ generieren, durch welchen der Roboter 1 mit der erweiterten Kinematik so bewegt wird, dass die z-Achse $z_r$ des Werkzeugkoordinatensystems 14, also die Symmetrieachse 8, und die Position des Referenzpunktes 15 der vorgegebenen 5D-Zielpose 16 entspricht. Gemäß der virtuellen, also erweiterten Kinematik kann das virtuelle Verbindungselement 18 dabei beliebig, das heißt ohne Limitierungen oder physische Einschränkungen, um die z-Achse $z_r$ rotiert sein oder werden. Das automatische Pfad-Planungsmodul stellt jedoch sicher, dass der Anteil q* des bestimmten oder generierten Pfades für den realen Roboter ausführbar ist, also nicht zu Konflikten mit physischen Limitierungen, beispielsweise einem maximalen Bewegungsumfang, des realen Roboters 1 führt.

Wenn der Anteil q* bestimmt worden ist, wird als Teil der Bestimmung des Pfades in einem Verfahrensschritt S7 eine hier durch einen entsprechenden Pfeil angedeutete virtuelle Rotation 20 des virtuellen Verbindungselements 18 um das virtuelle Gelenk 17 beziehungsweise um die z-Achse $z_r$ durchgeführt, bis eine Orientierung der x- und y-Achsen $x_r$, $y_r$ des Werkzeugkoordinatensystems 14 den Orientierungen die vorgegebenen Orientierungen $x_v$, $y_v$ entspricht, sodass das Werkzeugkoordinatensystem 14 also die 5D-Zielpose 16 erreicht hat. Durch diese abschließende Rotation 20 wird also die vorgegebene 5D-Zielpose 16 erreicht und zwar auch dann, wenn diese durch den realen Roboter 1 nicht erreicht werden könnte, da beispielsweise ein Verstellumfang der virtuellen Rotation 20 durch einen limitierten maximalen physischen Bewegungsumfang des Roboters 1 nicht realisiert werden kann. Durch die virtuelle Rotation 20 kann also die vorgegebene 5D-Zielpose 16 durch Ausnutzung der freien Einstellbarkeit des virtuellen Gelenks 17 dennoch erreicht werden.

In einem Verfahrensschritt S8 wird ein zu dem bestimmten Pfad (q*, $q_v$*) korrespondierendes Steuersignal von dem Steuergerät 18 erzeugt und an den Roboter 1 ausgegeben, sodass der Roboterflansch in die bestimmte 6D-Pose und damit das Werkzeug 7 in die vorgegebene 5D-Zielpose 16 bewegt wird. Die virtuelle Rotation 20 muss dabei nicht real ausgeführt werden, da aufgrund der zumindest funktionellen Rotationssymmetrie des Werkzeugs 7 bezüglich der vorgegebenen Symmetrieachse 8 die 5D-Zielpose 16 von dem Werkzeug unabhängig von dessen Rotation 20 oder Winkelstellung bezüglich der Symmetrieachse 8 effektiv, also funktional, erreicht oder eingestellt wird. Ebenso kann das Verfahren für Werkzeuge oder sonstige Objekte angewendet werden, welche auch nicht rotationssymmetrisch sein müssen. Es kann ausreichen, dass ein jeweilige Achse vorgegeben oder definiert wird, wobei Rotation um diese vorgegebene Achse dann als irrelevant oder unerheblich oder beliebig, also frei wählbar oder einstellbar, gelten oder behandelt werden. Damit ist also das Ziel erreicht, das Werkzeug 7 effektiv in der vorgegebenen 5D-Zielpose 16 zu positionieren. Da die virtuelle Rotation 20 nicht real an dem Werkzeug durchgeführt wird, wird zudem vorteilhaft auch der Marker 9 nicht mitrotiert. Dadurch kann der Marker 9 vorteilhaft mit höherer Wahrscheinlichkeit in einem Sichtfeld einer entsprechenden Erfassungseinrichtung verbleiben, also zuverlässiger nachverfolgt werden. Ebenso kann es das Werkzeug 7 beispielsweise um die vorgegebene Achse 8 drehbar durch den Roboter 1, insbesondere an dem Roboterflansch 5 oder an dem Werkzeughalter 6, gehalten sein. Das Werkzeug kann dann beispielsweise von einem Benutzer oder Anwender nach dem Positionieren des Werkzeugs 7 in der vorgegebenen 5D-Zielpose 16 manuell in eine gewünschte Rotations- oder Drehstellung bewegt werden. Das Verfahren kann also immer dann besonders vorteilhaft angewendet werden, wenn für den jeweiligen Benutzer oder Anwender eine Rotation oder Drehstellung des Werkzeugs 7 um eine bestimmte Achse unerheblich, also frei wählbar oder beliebig ist und somit keinen Einschränkungen unterliegt.

Sofern überhaupt auf irgendeine Art und Weise das Werkzeug 7 mittels des Roboters 1 in der vorgegebenen 5D-Zielpose 16 positioniert werden kann, wird somit eine real umsetzbare oder ausführbare Lösung für die entsprechende Steuerung des Roboters 1 gefunden.

Das letzte Element $q_v^*$ des bestimmten Pfades kompensiert dabei gegebenenfalls von dem realen Roboter 1 physisch nicht ausführbare Rotationen um die Z-Achse $z_r$, sodass das Pfad-Planungsmodul mit größerer Flexibilität und Zuverlässigkeit den zu dem realen Roboter 1 korrespondierenden Anteil q* bestimmen kann, sodass der reale Roboter 1 lediglich physisch tatsächlich durchführbare Rotationen um die z-Achse $z_r$ ausführen muss, um das Werkzeug 7 kollisions- und konfliktfrei in der vorgegebenen 5D-Zielpose 16 zu positionieren.

**Patentansprüche**

1. Verfahren (19) zum Steuern eines Roboters (1) zum automatischen Positionieren eines geometrisch und/oder funktionell rotationssymmetrischen Werkzeugs (7) in einer 5D-Zielpose (16), wobei der Roboter (1) einen beweglichen Roboterarm (3) aufweist, welcher endseitig einen Roboterflansch (5) aufweist, an welchem das Werkzeug (7) gehalten ist, mit den Verfahrensschritten

    - Vorgeben von 3D-Raumkoordinaten eines Referenzpunktes (15) des Werkzeugs (7), einer Achse (8) des Werkzeugs (7) und einer Orientierung dieser Achse (8) als Teil der 5D-Zielpose (16) für das Werkzeug (7),
    - Bestimmen einer zu der 5D-Zielpose (16) des Werkzeugs (7) korrespondierenden 6D-Pose des Roboterflansches (5),
    - Erweitern einer vorgegebenen Kinematik des Roboters (1) durch Ergänzen eines in dem Werkzeug (7) angeordneten virtuellen Gelenks (17), welches virtuell eine einschränkungsfreie Rotation (20) um die vorgegebene Achse (8) des Werkzeugs (7) ermöglicht,
    - Bereitstellen der bestimmten 6D-Pose des Roboterflansches (5) und der erweiterten Kinematik an ein automatisches Pfad-Planungsmodul (10), und
    - mittels des automatischen Pfad-Planungsmoduls Bestimmen eines Pfades, gemäß welchem aus einer jeweils aktuellen Ausgangspose des Roboters (1) die bestimmte 6D-Pose des Roboterflansches (5) angefahren werden kann, wobei dabei auftretende Konflikte mit einem maximalen physischen Bewegungsumfang des Roboters (1) automatisch mittels des Pfad-Planungsmoduls durch eine Rotation (20) des virtuellen Gelenks (17) gelöst werden, **dadurch gekennzeichnet, dass** die vorgegebene Achse (8) eine Symmetrieachse des Werkzeugs (7) ist, wobei zusätzlich zu dem virtuellen Gelenk (17) ein virtuelles Verbindungselement (18) vorgegeben wird, welches das virtuelle Gelenk (17) mit dem Referenzpunkt (15) und/oder mit einer von dem Roboterflansch (5) abgewandten Spitze des Werkzeugs (7) verbindet.

2. Verfahren (19) nach Anspruch 1, **dadurch gekennzeichnet, dass** der bestimmte Pfad automatisch an ein Steuergerät (10) des Roboters (1) übermittelt wird und der Roboter (1) mittels des Steuergeräts (10) gemäß dem bestimmten Pfad automatisch angesteuert wird, sodass der Roboterflansch (5) in die für diesen bestimmte Pose und somit das Werkzeug (7) in die vorgegebene 5D-Zielpose (16) gelangt.

3. Verfahren (19) nach einem der vorhergehenden Ansprüche, **dadurch gekennzeichnet, dass** automatisch jeweils aktuelle Werte von Gelenkvariablen q der realen Gelenke des Roboters (1) in der Ausgangspose bestimmt, als Teil der erweiterten Kinematik ein Satz von Gelenkvariablen $(q, q_v)$ bereitgestellt und von dem automatischen Pfad-Planungsmodul (10) als Teil des Pfades ein Satz von Gelenkvariablen $(q^*, q_v^*)$ bestimmt wird, wobei der untere Index v das virtuelle Gelenk und der obere Index * zu der vorgegebenen 5D-Zielpose (16) korrespondierenden Zielwerte der jeweiligen Gelenkvariablen bezeichnen.

4. Verfahren (19) nach einem der vorhergehenden Ansprüche, **dadurch gekennzeichnet, dass** als Position des virtuellen Gelenks (17) ein Mittelpunkt des Werkzeugs (7) vorgegeben wird.

5. Verfahren (19) nach einem der vorhergehenden Ansprüche, **dadurch gekennzeichnet, dass** als der Referenzpunkt (15) des Werkzeugs (7) eine von dem Roboterflansch (5) abgewandte Spitze des Werkzeugs (7) verwendet wird.

6. Verfahren (19) nach einem der Ansprüche 1 bis 4 oder nach Anspruch 5 in dessen Rückbezug auf einen der Ansprüche 1 bis 3, **dadurch gekennzeichnet, dass** als Position des virtuellen Gelenks (17) der Referenzpunkt (15) des Werkzeugs (7) vorgegeben wird.

7. Verfahren (19) nach einem der vorhergehenden Ansprüche, **dadurch gekennzeichnet, dass** dem automatischen Pfad-Planungsmodul (10) eine Nebenbedingung, insbesondere eine Eigenschaft einer Pose des Roboterarms (3) bei Erreichen der 5D-Zielpose (16) durch das Werkzeug (7), übergeben wird, welche von dem automatischen Pfad-Planungsmodul (10) beim Bestimmen der Pfades durch wenigstens eine virtuelle Rotation (20) des virtuellen Gelenks (17) unter Berücksichtigung einer physischen Limitierung des Roboters (1) automatisch eingehalten wird, sofern dabei kein Konflikt mit einer physischen Limitierung des Roboters (1) auftritt.

8. Datenspeicher mit einem Programmcode, der die Verfahrensschritte (S1-S8) eines Verfahrens (19) nach einem der vorhergehenden Ansprüche kodiert.

9. Roboter (1) mit einem beweglichen Roboterarm (3), welcher endseitig einen Roboterflansch (5) zum Halten eines Werkzeugs (7) aufweist, und mit einem Steuergerät (10), umfassend eine Schnittstelle (11) zum Empfangen von Vorgaben, einen Datenspeicher gemäß Anspruch 8 und eine mit diesem und der Schnittstelle (11) verbundene Prozessoreinrichtung zum Ausführen des in dem Datenspeicher gespeicherten Programmcodes.


**Claims**

1. Method (19) for controlling a robot (1) for automatic positioning of a geometrically and/or functionally rotationally symmetrical tool (7) in a 5D target pose (16), wherein the robot (1) has a movable robot arm (3), which has a robot flange (5) on its end side, on which the tool (7) is held, with the method steps

  - Specifying 3D space coordinates of a reference point (15) of the tool (7), of an axis (8) of the tool (7) and of an orientation of this axis (8) as part of the 5D target pose (16) for the tool (7),
  - Determining a 6D pose of the robot flange (5) corresponding to the 5D target pose (16) of the tool (7),
  - Expanding a predetermined kinematics of the robot (1) by augmenting it with a virtual joint (17) arranged in the tool (7), which makes possible a virtual restriction-free rotation (20) about the predetermined axis (8) of the tool (7),
  - Providing the determined 6D pose of the robot flange (5) and the expanded kinematics to an automatic path planning module (10), and
  - Determining by means of the automatic path planning module a path in accordance with which the 6D pose of the robot flange (5) determined can be moved to from a current initial pose of the robot (1) in each case,
  wherein conflicts occurring during this process with a maximum physical scope of movement of the robot (1) are resolved automatically by means of the path planning module by a rotation (20) of the virtual joint (17),
  **characterised in that** the predetermined axis (8) is an axis of symmetry of the tool (7),
  wherein in addition to the virtual joint (17), a virtual connecting element (18) is predetermined, which connects the virtual joint (17) to the reference point (15) and/or to a tip of the tool (7) facing away from the robot flange (5).

2. Method (19) according to claim 1, **characterised in that** the path determined is transferred automatically to a control device (10) of the robot (1) and the robot (1) is activated automatically by means of the control device (10) in accordance with the path determined, so that the robot flange (5) arrives at the pose determined for it and thus the tool (7) arrives at the predetermined 5D target pose (16).

3. Method (19) according to one of the preceding claims, **characterised in that** current values of joint variables q of the real joints of the robot (1) in the initial pose are determined automatically in each case, a set of joint variables $(q, q_v)$ is provided as part of the expanded kinematics and a set of joint variables $(q^*, q_v^*)$ is determined by the automatic path planning module (10) as part of the path, wherein the lower index v refers to the virtual joint and the upper index * to target values of the respective joint variables corresponding to the predetermined 5D target pose (16) .

4. Method (19) according to one of the preceding claims, **characterised in that** a centre point of the tool (7) is predetermined as the position of the virtual joint (17).

5. Method (19) according to one of the preceding claims, **characterised in that** a tip of the tool (7) facing away from the robot flange (5) is used as the reference point (15) of the tool (7).

6. Method (19) according to one of claims 1 to 4 or according to claim 5 in its reference back to one of claims 1 to 3, **characterised in that** the reference point (15) of the tool (7) is predetermined as the position of the virtual joint (17).

7. Method (19) according to one of the preceding claims, **characterised in that** an ancillary condition, in particular a property of a pose of the robot arm (3) when the tool (7) reaches the 5D target pose (16), is transferred to the automatic path planning module (10), which is complied with automatically by the automatic path planning module (10) when the path is determined by at least one virtual rotation (20) of the virtual joint (17) taking into consideration a physical limitation of the robot (1), provided no conflict with a physical limitation of the robot (1) occurs when this is done.

8. Data memory with program code, which encodes the method steps (S1-S8) of a method (19) according to one of the preceding claims.

9. Robot (1) with a movable robot arm (3), which has a robot flange (5) for holding a tool (7) on its end side, and with a control device (10), comprising an interface (11) for receiving specifications, a data memory according to claim 8 and a processor device connected to said memory and to the interface (11) for executing the program code stored in the data memory.

## Revendications

**1.** Procédé (19) de commande d 'un robot (1) pour la mise en position automatique d 'un outil (7) de révolution géométriquement et /ou fonctionnellement dans une pose (16) cible en 5D, dans lequel le robot (1) a un bras (3) de robot mobile, qui a du côté de l 'extrémité une bride (5) de robot, à laquelle l 'outil (7) est retenu, comprenant les stades de procédé

- prescription de coordonnées spatiales en 3D d 'un point (15) de référence de l 'outil (7), d 'un axe (8) de l 'outil (7) et d 'une orientation de cet axe (8) comme partie de la pose (16) cible en 5D pour l 'outil (7),
- détermination d 'une pose en 6D, correspond à la pose (16) cible en 5D de l 'outil (7), de la bride (5) du robot,
- extension d 'une cinématique donnée à l 'avance du robot (1) par ajout d 'une articulation (17) virtuelle montée dans l 'outil (7), qui rend possible virtuellement une rotation (20) sans limitation autour de l 'axe (8) donné à l 'avance de l 'outil (7),
- mise de la pose en 6D déterminée de la bride (5) du robot et de la cinématique étendue à disposition d 'un module (10) automatique de planification de chemin, et
- au moyen du module automatique de planification de chemin, détermination d 'un chemin suivant lequel on peut, à partir d 'une pose initiale en cours respective du robot (1), accéder à la pose en 6D déterminée de la bride (5) de robot,
dans lequel on résout des conflits se produisant avec un pourtour de déplacement physique maximum du robot (1) automatiquement au moyen du module de planification de chemin par une rotation (20) de l 'articulation (17) virtuelle, **caractérisé en ce que** l 'axe (8) donné à l 'avance est un axe de symétrie de l 'outil (7), dans lequel, en plus de l 'articulation (17) virtuelle, on prescrit un élément (18) virtuel de liaison, qui relie l 'articulation (17) virtuelle au point (15) de référence et /ou à une pointe, loin de la bride (5) du robot, de l 'outil (7).

**2.** Procédé (19) suivant la revendication 1, **caractérisé en ce que** l 'on transmet le chemin déterminé automatiquement à un appareil (10) de commande du robot (1) et on commande automatiquement le robot (1) au moyen de l 'appareil (10) de commande suivant le chemin déterminé,
de manière à ce que la bride (5) du robot arrive dans la pose déterminée pour celle -ci et qu 'ainsi l 'outil (7) arrive dans la pose (16) cible en 5D donnée à l 'avance.

**3.** Procédé (19) suivant l 'une des revendications précédentes, **caractérisé en ce que** l 'on détermine, dans la pose initiale, automatiquement respectivement des valeurs en cours de variables q d 'articulation des articulations réelles du robot (1), on met à disposition, comme partie de la cinématique étendue, un ensemble de variables $(q, q_v)$ d 'articulation et on détermine, par le module (10) automatique de planification de chemin, comme partie du chemin, un ensemble de variables $(q^*, q_v^*)$ d 'articulation, dans lequel l 'indice v inférieur de l 'articulation virtuelle et l 'indice * supérieur désignent des valeurs cible, correspondant à la pose (16) cible en 5D donnée à l 'avance, des variables d 'articulation respectives.

**4.** Procédé (19) suivant l 'une des revendications précédentes, **caractérisé en ce que** l 'on prescrit, comme position de l 'articulation (17) virtuelle, un point médian de l 'outil (7).

**5.** Procédé (19) suivant l 'une des revendications précédentes, **caractérisé en ce que** l 'on utilise, comme point (15) de référence de l 'outil (7), une pointe, loin de la bride (5) du robot, de l 'outil (7) .

**6.** Procédé (19) suivant l 'une des revendications 1 à 4 ou suivant la revendication 5, lorsqu 'elle se rapporte à l 'une des revendications 1 à 3, **caractérisé en ce que** 1 'on prescrit, comme position de l 'articulation (17) virtuelle, le point (15) de référence de l 'outil (7).

**7.** Procédé (19) suivant l 'une des revendications précédentes, **caractérisé en ce que** 1 'on transmet au module (10) automatique de planification de chemin une condition secondaire, notamment une propriété d 'une pose du bras (3) du robot, lorsque la position (16) cible en 5D est atteinte par l 'outil (7), qui est maintenue automatiquement en tenant compte d 'une limitation physique du robot (1), par le module (10) automatique de planification du chemin, lors de la détermination de chemin par au moins une rotation (20) virtuelle de l 'articulation (17) virtuelle, dans la mesure où il ne se produit pas de conflit avec une limitation physique du robot (1) .

**8.** Mémoire de données ayant un code de programme, qui code les stades (S1 à S8) d 'un procédé (19) suivant l 'une des revendications précédentes.

**9.** Robot (1) ayant un bras (3) de robot mobile, qui a du côté de l'extrémité une bride (5) de robot pour retenir un outil (7), et ayant un appareil (10) de commande, comprenant une interface (11) de réception de prescriptions, une mémoire de données suivant la revendication 8 et un dispositif à processeur relié à celle -ci et à l'interface (11) pour l'exécution du code de programme mis dans la mémoire de données.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LEONTJEVS et al.** Singularity Avoidance by Virtual Redundant Axis and its Application to Large Base Motion Compensation of Serial Robots. *Proc. RAAD,* 2012, vol. 21, 77-84

- **ZHIJUN LI et al.** Motion Control of Nonholonomic Mobile Underactuated Manipulator. *IEEE International Conference on Robotics and Automation,* 2006, 3512-1519